(19) Europäisches Patentamt
European Patent Office
Office européen des brevets

(11) **EP 2 887 029 B1**

(12) **EUROPÄISCHE PATENTSCHRIFT**

(45) Veröffentlichungstag und Bekanntmachung des Hinweises auf die Patenterteilung:
**09.03.2016 Patentblatt 2016/10**

(21) Anmeldenummer: **13199149.9**

(22) Anmeldetag: **20.12.2013**

(51) Int Cl.:
*G01G 11/00* (2006.01)    *G01G 19/393* (2006.01)
*G01G 23/37* (2006.01)    *G01F 1/66* (2006.01)
*G01F 1/00* (2006.01)

(54) **Befüllungsvorrichtung und Verfahren zum Erfassen einer Befüllung**

Conveying means and method for detecting its conveyed charge

Dispositif de chargement et procédé de détection de la charge convoyée

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**24.06.2015 Patentblatt 2015/26**

(73) Patentinhaber: **Multipond Wägetechnik GmbH**
**84478 Waldkraiburg (DE)**

(72) Erfinder:
• **Hofer, Franz**
**84539 Ampfing (DE)**

• **Hübel, Florian**
**84478 Waldkraiburg (DE)**
• **Zeck, Wolfram C.**
**84453 Mühldorf (DE)**

(74) Vertreter: **Prüfer & Partner mbB**
**Patentanwälte · Rechtsanwälte**
**Sohnckestraße 12**
**81479 München (DE)**

(56) Entgegenhaltungen:
**DE-A1- 4 230 626    JP-A- 2006 234 395**
**JP-A- 2013 195 125**

**Beschreibung**

Die vorliegende Erfindung betrifft eine Befüllungsvorrichtung, insbesondere für eine Wägeeinrichtung, sowie ein Verfahren zum Erfassen einer Befüllung.

In der Anlagentechnik müssen häufig verschiedene Produkte gehandhabt werden. Dabei werden die Produkte zwischen und innerhalb verschiedener Maschinen transportiert, gelagert, verteilt, sortiert, verarbeitet, verwogen usw.

In vielen Fällen der Anlagentechnik, so beispielsweise bei Wägeeinrichtungen, soll eine Überwachung verschiedener Transportwege erfolgen. Dabei sollen Änderungen im Transportverhalten, beispielsweise Änderungen hinsichtlich eines Volumenstroms, einer durchschnittlichen Befüllung und Ähnliches erfasst werden. Die Produktbeschaffenheit ist dabei oft nicht homogen und die einzelnen Produkte können von körnig bis grobstückig sein; ihre Form kann unregelmäßig sein und die physikalischen Eigenschaften können schwanken.

So beschreibt JP2013195125 (A) eine Kombinationswägeeinrichtung, bei der 2 Kameras eine runde Transportfläche beobachten, wobei diese Transportfläche in einzelne radiale "radial feeders 3" eingeteilt wird.

Dazu kommt das unvorhersehbare Verhalten der Förderbarkeit durch das Zusammenwirken der Einzelstücke durch Anhaften, Verkeilen oder Verklumpen. Das führt in der Praxis dazu, dass die gleichmäßige Produktverteilung auf einer Transportfläche gestört werden kann. Es können lokale Anhäufungen von Produkt oder Lücken entstehen. In ungünstigen Fällen kann ein Transport in vorgesehenen Transportrinnen stellenweise ganz versperrt bleiben und die Rinne kann leerlaufen. Dadurch kann auch die Produktzufuhr auf benachbarten Rinnen gestört werden und die initiale Verteilung kann ebenfalls eingeschränkt werden. Unter Umständen kann eine derartige Anhäufung an einem Rinnenende auch eine komplette Befüllung vortäuschen und eine Wiederbefüllung ganz verhindern. Dies führt konsequent zur Unterversorgung aller anderen Transportrinnen.

Die Auswirkungen solcher Störungen werden von der Waage sehr viel später erkannt und zwar dann, wenn die abzuwiegenden Teilmengen immer leichter werden. Daraufhin versucht die Waage, die Parameter, welche die Produktzufuhr steuern, zu ändern, um einem Produktmangel entgegenzuwirken. Manchmal führt das zu der Lösung des Problems, jedoch erst viel später nach dem eigentlichen Auftreten und mit der Konsequenz einer generellen Störung des ansonsten gut funktionierenden Zufuhrsystems. Schwankungen in der Leistung und Genauigkeit der Waage sind die Folge.

Dies kann jedoch auch zu viel ernsteren Konsequenzen bis hin zu der Unmöglichkeit einer Kombinationsfindung in einer Kombinationswaage, zu häufigen Nachdosierungen, Überfüllungen, Auswürfen und Leistungseinbrüchen oder dem völligen Stillstand führen. Dann ist ein manueller Eingriff erforderlich und es bedarf einer gewissen Zeit bis die Waage wieder zu dem gewohnten Rhythmus zurückfindet.

Um einen störungsfreien Ablauf zu gewährleisten, werden daher häufig zusätzliche Informationen über die Beschaffenheit und die Verteilung des Produktes an bestimmten Stellen oder Flächen innerhalb der Vorrichtungen benötigt. Dazu wird eine Vielzahl von Sensoren vorgesehen, die mit unterschiedlichen Messprinzipien ermöglichen beispielsweise die Entfernung, die Farbe, die Geschwindigkeit, verschiedene Materialeigenschaften usw. zu erfassen. Diese Informationen beziehen sich in der Regel auf einen Messpunkt oder eine Messfläche.

Anhand der gewonnenen Informationen lassen sich Entscheidungen über den weiteren Verlauf des überwachten Prozesses treffen, Daten zu den einzelnen Prozessen, beispielsweise über deren Zustand, Tendenz oder Effizienz können ermittelt werden. Insbesondere die Informationen darüber, wie viel Produkt welcher Art an einer beobachteten Stelle vorhanden ist, bilden den IST-Zustand eines Prozesses ab. Verschiedene, den Anforderungen und Zielen entsprechende Regelungsalgorithmen können dann zum Einsatz kommen. So soll ein kontrollierbarer Ablauf sichergestellt werden.

Derartige Sensoren, beispielsweise so genannte 3D-Sensoren, sind zwar allgemein bekannt, so etwa aus den Schriften US 8 350 847 B2, US 2012 075 534 A1, US 2011 292 036 A1 oder US 2012 056 982 A1. Jedoch wird abhängig von der zu beobachtenden Fläche eine Vielzahl dieser Sensoren benötigt. Die Anzahl der Sensoren hängt insbesondere davon ab, welche Messfläche sie im Einzelnen erfassen und wie viele Teilflächen innerhalb der von der Gesamtheit der Sensoren zu erfassenden Gesamtfläche wirklich von Interesse sind. Bei einer festen Anzahl von fest lokalisierten Teilflächen muss dann die entsprechende Anzahl von Sensoren zum Einsatz kommen, jede Teilfläche erfordert also einen separaten Sensor. Bei Änderung der Anzahl oder der Lokalisierung dieser Teilflächen müssen neue Sensoren zum Einsatz kommen oder die bestehenden neu positioniert werden.

Dieses Vorgehen ist teuer und kompliziert. Zudem wird ein hoher Zeitaufwand zur Installation und Einstellung der Sensoren benötigt.

Es ist daher eine Aufgabe der Erfindung, wenigstens einen der genannten Nachteile zu vermeiden und eine verbesserte Produktbefüllung zu ermöglichen.

Diese Aufgabe wird erfindungsgemäß gelöst durch eine Vorrichtung gemäß Anspruch 1 sowie durch ein Verfahren gemäß dem unabhängigen Verfahrensanspruch.

Gemäß einem Aspekt der vorliegenden Erfindung weist eine Befüllungsvorrichtung, insbesondere für eine Wägeeinrichtung, eine Transportfläche, die von einer Beschickungsvorrichtung mit Produkten versorgt wird, und wenigstens einen Sensor zum Erfassen und Weiterleiten von Produktbelegungsinformationen auf der Transportfläche auf. Zudem ist eine Steuervorrichtung in der Befüllungsvorrichtung vorgesehen, wobei der wenigstens eine Sensor ausgebildet ist, zumindest eine Teilfläche der Transportfläche zu erfassen, und die Steuerungsvorrichtung ausgebildet ist, die von dem wenigstens einen Sensor erfasste Fläche virtuell in eine Mehrzahl an Sektoren zu unterteilen. Das bedeutet, der Sensor ist in der Lage, zwei oder mehr unabhängige Teilflächen zu erfassen. Wie später noch zu zeigen ist, können einer oder mehrere Sektoren auch in Zonen eingeteilt sein.

Die Sektoren bzw. die Zonen können willkürlich festgelegt werden. Alternativ können diese auch festen, vorbestimmten Bereichen der Befüllungsvorrichtung zugeordnet werden, wie ebenfalls später noch detailliert beschrieben wird.

In einigen Ausführungsformen der Erfindung kann die Produktbelegungsinformation eine Flächenbedeckung der Transportfläche oder eines Teils der Transportfläche sein. In wiederum einigen Ausführungsformen kann die Produktbelegungsinformation auch ein Produktvolumen sein, das einem Sektor, einer Zone und/oder der erfassten Fläche bzw. Teilfläche zugeordnet ist.

So kann im Idealfall die gesamte Transportfläche mit nur einem Sensor erfasst werden. Dies kann die Kosten einer Befüllungsvorrichtung reduzieren. Dies kann auch eine vereinfachte Einrichtung der Befüllungsvorrichtung ermöglichen.

Ein derartiger Sensor funktioniert, indem er für jeden Messpunkt eine Koordinateninformation (x,y,z) erfasst, wobei (x,y) eine Position auf der Befüllungsvorrichtung kennzeichnen kann, und (z) eine Tiefeninformation, also eine Abstandsmessung, darstellen kann.

Die Befüllungsvorrichtung kann in einigen Weiterbildungen auch eine oder mehrere Transportrinnen aufweisen. In den Transportrinnen wird das zugeführte Produkt zu Weiternutzung transportiert. Der Transport erfolgt dabei in der Regel passiv, also beispielsweise durch das Eigengewicht der zugeführten Produkte, die beispielsweise getrieben durch die Gravitation entlang der Rinne von einem Ende der Transportrinne zu einem anderen Ende der Transportrinne wandern. Das nachgefüllte Produkt am Zufuhrende der Transportrinne drängt dabei das vorgelagerte Produkt weiter zu dem anderen Ende der Rinne.

Zudem kann eine Verteilvorrichtung vorgesehen sein. Diese kann beispielsweise als ein Verteilteller ausgebildet sein. Die Verteilvorrichtung kann in einigen Ausführungsformen beispielsweise drehbar um eine Rotationsachse vorgesehen sein, während sie in anderen Ausführungsformen ortsfest und nicht drehbar ausgebildet ist. In wiederum einigen Ausführungsformen kann die Verteilvorrichtung auch in einer vertikalen Richtung verstellbar sein und/oder derart gelagert sein, dass eine Vibration der Verteilvorrichtung ermöglicht ist. Auch ist in einigen Ausführungsformen denkbar, dass die gesamte Transportfläche so gelagert ist, dass diese in Vibration versetzt werden kann.

In einigen Ausführungsformen kann wenigstens einer der Sektoren bzw. wenigstens eine der Zonen deckungsgleich zu einer Transportrinne sein. Auch kann wenigstens einer der Sektoren bzw. wenigstens eine der Zonen deckungsgleich zu einem Teil der Verteilvorrichtung sein.

So kann mit einem oder mit wenigen Sensoren die gesamte Transportfläche erfasst werden und eine Mehrzahl gewünschter Erfassungsbereiche können gleichzeitig mit demselben Sensor erfasst werden. So kann eine Analyse der vorbestimmten Transportwege, vorzugsweise also der jeweiligen Transportrinnen bzw. der gewünschten Bereiche der Verteilvorrichtung, auf einfache Art und Weise vorgenommen werden.

Die Sektoren können dabei in einzelne Zonen aufgeteilt werden. So kann eine noch detailliertere Analyse der Transportwege vorgenommen werden, um beispielsweise einen Fehlerort innerhalb eines fehlerbehafteten Sektors zu identifizieren.

In einigen Ausführungsformen ist die Steuervorrichtung insbesondere derart ausgebildet, dass die jeweiligen Sektoren und/oder die jeweiligen Zonen mittels kartesischer Koordinaten-Bereiche eingeteilt sind. Diese Koordinaten sind vorzugsweise Koordinaten relativ zu der Sensorposition. In einigen Ausführungsformen können die Koordinaten jedoch auch relativ zu einer anderen, vorbestimmten Position angegeben sein.

Durch das Vorsehen von Koordinatenbereichen kann eine klare, leicht zu erfassende Einteilung der Transportfläche ermöglicht werden. So kann eine schnelle Fehlerfindung ermöglicht werden. Dies kann der Produktivität der Vorrichtung zuträglich sein.

Zudem kann in einigen Ausführungsformen ein Anzeigemittel vorgesehen sein, das eine Anzeige der Befüllungsvorrichtung oder zumindest der Transportfläche erlaubt. Dabei können auf dem Anzeigemittel die Sektoren bzw. die Zonen oder zumindest ein Teil der Sektoren bzw. Zonen dargestellt sein. Die jeweiligen Sektoren bzw. Zonen können zusätzlich oder ausschließlich auch mittels einer farbigen Darstellung bzw. einer farbigen Überlagerung darstellbar sein. So kann eine schnellere Fehleridentifikation ermöglicht werden.

Die jeweiligen Sektoren bzw. die in den jeweiligen Sektoren vorgesehenen Zonen sind auf dem Anzeigemittel vorteilhafterweise jeweils einer einmalig verwendeten Farbe zugeordnet, so dass eine Identifikation eines Sektors bzw. einer Zone mittels einer Farbe eindeutig ist. Das bedeutet, die Steuervorrichtung weist jedem Sektor bzw. jeder Zone eine bestimmte Farbinformation zu. Diese Farbinformation kann beispielsweise im RGB-System vorliegen.

So könnte beispielsweise einem Sektor, z.B. einem ersten Rinnenboden, die Farbinformation (R=250, G=50, B=0) zugewiesen sein, während einem anderen Sektor die Farbinformation (R=240, G=50, B=0) zugewiesen ist. Auch könnte der erste Sektor unterteilt sein in Zonen, wobei eine Zone vorgesehen sein könnte mit der Farbinformation (R=250, G=50, B=0) und eine weitere Zone mit der Farbinformation (R=$25_0$, G=60, B=0), etc. Dadurch kann neben der von dem Sensor erfassten Information hinsichtlich der Koordinaten (x,y,z) eine weitere einfache Zuordnung zu einem bestimmten Bereich, also Sektor bzw. zone, ermöglicht werden.

Somit können bei der Auswertung der Tiefeninformation des 3D-Sensors, alle Punkte mit den gleichen Farbinformationen ausgewertet werden und ein mittlerer Wert gefunden werden, welcher die Produktbelegung in diesem Bereich widerspiegelt.

Natürlich ist auch eine andere Zuordnung denkbar, so lange die einzelnen Sektoren bzw. die einzelnen Zonen eindeutig definiert sind. So könnte auch lediglich eine vierte Koordinate (n) hinzugefügt werden, die eine Zuordnung zu einem bestimmten Bereich kennzeichnet.

In einigen Ausführungen ist es auch denkbar, dass sich eine Anzeige der Sektoren und/oder der Zonen verändert, beispielsweise durch Wechsel von einer nicht-farbigen zu einer farbigen Anzeige oder einer Veränderung der Intensität oder Helligkeit zumindest eines Teils der Anzeige und zumindest zeitweise. Diese Veränderung der Anzeige kann auch auf beliebige andere Weise vorgenommen werden, die eine Hervorhebung eines Sektors bzw. einer Zone ermöglicht.

Die Veränderung der Anzeige kann dabei aufgrund der Produktbelegungsinformationen verändert werden. So kann beispielsweise ein durch eine Transportrinne tretender Volumenstrom erfasst werden. Sobald hier eine Diskontinuität von einer Zone zu einer anderen Zone auftritt, kann eine entsprechende Meldung angezeigt werden. So kann eine schnellere Fehleridentifikation, wie beispielsweise eine Blockade der Transportrinne, vorgenommen werden.

Analog könnte eine Veränderung in dem Volumenstrom innerhalb einer Transportrinne festgestellt werden, was auf eine fehlerhafte Befüllung schließen lassen könnte.

Dies alles kann es erlauben, frühzeitige Funktionsbeschränkungen der Befüllungsvorrichtung zu erkennen. Dies kann helfen, eine Produktivität der Vorrichtung zu erhöhen.

In einigen Ausführungen kann die Befüllung der Transportfläche insbesondere die Befüllung jedes Sektors bzw. jeder Zone quantifiziert werden. So kann eine absolute Bestimmung des von dem Produkt eingenommenen Volumens innerhalb eines Bereichs vorgenommen werden. Dies kann beispielsweise durch Integration der erfassten Belegung, also der durch den Sensor erfassten z-Werte, für den jeweiligen Bereich erfolgen.

Dabei können auch Produkteigenschaften, wie beispielsweise Geometrie, Porosität, oder ähnliches, in Betracht gezogen werden, um eine möglichst exakte Bestimmung der Produktbelegung vornehmen zu können.

Bei der Berechnung der Produktbelegung in einem Bereich werden in einigen Ausführungsformen die Tiefeninformationen aller Punkte mit gleichen Farbinformationen berücksichtigt.

Aufgrund des Messprinzips und der bestehenden Umwelteinflüsse unterliegen die Werte einer Schwankung, die beträchtlich sein kann. Selbst unmittelbar benachbarte Punkte können erhebliche Unterschiede aufweisen. Um die Zuverlässigkeit des Informationsgehaltes zu erhöhen, kann in einigen Ausführungsformen die Steuervorrichtung daher des Weiteren einen Filter umfassen, zum Glätten der von dem Sensor erfassten Produktbelegungsinformationen.

Dies kann beispielsweise mit einem Filteralgorithmus erreicht werden. Dieser Filteralgorithmus kann bei der Auswertung in einigen Ausführungsformen für einen bestimmten Messpunkt p(x,y) einen oder mehrere benachbarte Messpunkte mit einbeziehen und kann daraus einen gewichteten Mittelwert bilden. Ein möglicher Algorithmus zur Berechnung eines Mittelwertes, der in einigen Ausführungsformen angewandt wird, kann folgendermaßen wiedergegeben werden:

$$mwp(x,y) = wp(x,y) + k1 * [wp(x-1,y) + wp(x+1,y) + wp(x,y-1) + wp(x,y+1)]$$
$$+ \ldots + k2 * [wp(x-1,y+1) + wp(x+1,y+1) + wp(x+1,y-1)$$
$$+ wp(x-1,y-1)]$$

wobei mwp(x,y) der gewichtete Mittelwert für den Messpunkt p(x,y) ist, wp(x,y) der Wert für den Messpunkt p(x,y) ist und k1, k2 Gewichtungsfaktoren sind. Die Bezeichnung (x-1,y) stellt dabei den Messpunkt dar, der in Abszissen-Richtung, also in der positiven Richtung in einem kartesischen Koordinatensystem, vor dem Punkt mit der Koordinate (x,y) liegt. Entsprechendes gilt für die Bezeichnungen (x+1,y), (x,y-1) bzw. (x,y+1).

Zudem kann die Steuervorrichtung ausgebildet sein, die Messwerte auf Plausibilität zu untersuchen. Dies kann beispielsweise ein Vergleich von Informationen benachbarter Messpunkte sein. Dabei könnten beispielsweise Diskontinuitäten zwischen den Messpunkten festgestellt werden.

In einigen Ausführungsformen können dazu auch Bereiche definiert werden, innerhalb derer sich die Messwerte befinden müssen, um bei weitern Berechnungen berücksichtigt zu werden. Als Bereichsgrenzen werden mögliche $\pm$ Abweichungen definiert. Werte außerhalb dieser Bereiche könnten dann ignoriert werden.

Zudem kann in einigen Ausführungen ein rekursiver Filteralgorithmus zum Ausfiltern von zeitweise ausreißenden Messwerten angewendet werden, der wie folgt lauten kann:

$$fwp(x,y,t) = [q0*mwp(x,y)+q1*fwp(x,y,t-1) + \dots$$
$$+ qd*fwp(x,y,t-d)]/[q0+q1+\dots+qd),$$

wobei fwp(x,y,t) den Filterwert um den Punkt p(x,y) zu einem bestimmten Zeitpunkt t darstellt, und q0,...,qd Gewichtungsfaktoren für die in Betracht zu ziehenden übrigen Werte.

In den obigen Betrachtungen wird mit dem "Wert" die erfasste Tiefeninformation bezüglich dem Messpunkt (x,y) bzw. dem zugeordneten Bereich, hier einem Sektor bzw. einer Zone, bezeichnet.

Für den gesamten Bereich, beispielsweise die gesamte Zone, kann dann ein Zonenmittelwert gebildet werden als arithmetischer Mittelwert aller zu der Zone gehörender Punkte fwz(i,j,t), wobei i den Sektor bezeichnet, j die Zone bezeichnet und t der letzte berücksichtigte Wert ist.

In einer derartigen Ausführungsform stellt der berechnete Wert also eine mittlere Produktbelegungshöhe dar und ist ein Maß des Produktvolumens. Bei Kenntnis der Fläche des zugrunde liegenden Bereichs kann daraus dann entsprechend das Volumen berechnet werden.

In einigen Ausführungsformen der Erfindung weist die Befüllungsvorrichtung des Weiteren eine Speichervorrichtung auf. Darin können Positionsinformationen der erfassten Transportfläche gespeichert werden. Diese Positionsinformationen können beispielsweise die Koordinaten wenigstens eines Referenzpunktes enthalten. Der Referenzpunkt kann ein beliebiger, vorzugsweise ein leicht zu erfassender, Punkt der Befüllungsvorrichtung sein. Ein derartiger Referenzpunkt könnte beispielsweise ein Mittelpunkt der Transportfläche, ein Mittelpunkt der Verteilvorrichtung, ein vorbestimmter Punkt an der Peripherie der Vorrichtung oder ähnliches sein.

Durch die so bekannte Lage des Sensors relativ zu der Befüllungsvorrichtung kann eine genauere Bestimmung der Höhe der Produktbelegung anhand der Tiefeninformation ermöglicht werden.

Zudem kann es das Speichern der Position des Referenzpunktes ermöglichen, eine schnellere Ausrichtung des Sensors beispielsweise nach dessen Verstellung oder Neuausrichtung zu erreichen. Auch kann es ermöglicht werden, dass vor oder während des Betriebs der Befüllungsvorrichtung eine Überprüfung der Ausrichtung des Sensors vorgenommen wird. Dazu können auch verschiedene Referenzpunkte herangezogen werden für einen Fall, dass einer oder mehrere der Referenzpunkte nicht erfassbar sind, beispielsweise aufgrund einer Abdeckung durch das Produkt. So kann eine Zuverlässigkeit der Vorrichtung erhöht werden.

In einigen Ausführungsformen ist es auch denkbar, dass der Sensor mittels entsprechender Verstellmittel rejustiert wird, aufgrund eines Vergleichs zwischen tatsächlicher Position eines Referenzpunktes und einer gespeicherten Position. So kann eine Kalibrierung der Befüllungsvorrichtung vorgenommen werden. Dies kann wiederum die Zuverlässigkeit der Vorrichtung erhöhen.

In einigen Ausführungen können auch mehrere Sensoren vorgesehen sein. Dies kann beispielsweise dann notwendig sein, wenn ein Sensor nicht die gesamte relevante Transportfläche erfassen kann. Ein zweiter Sensor kann jedoch auch als redundantes System vorgesehen sein, um im Fehlerfall einen primären Sensor zu ersetzen. Zudem kann ein zweiter Sensor verwendet werden, um die Ergebnisse des ersten Sensors zu überprüfen bzw. eine weitere Messung desselben Bereichs bereit zu stellen. Insofern kann ein zweiter Sensor insbesondere auch so angeordnet sein, dass die von dem zweiten Sensor erfasste Fläche zumindest teilweise mit der erfassten Fläche des ersten Sensors überlappt.

So kann eine Präzision der Vorrichtung erhöht werden. Es können auch mehrere Sensoren verwendet werden, wenn die jeweiligen Umstände dies erfordern.

In einigen Ausführungsformen kann die Steuervorrichtung auch derart ausgebildet sein, dass ein Wert für eine ‚Grundbelegung, also eine Nullstellung, für einen Sektor bzw. für eine Zone vorbestimmt wird und/oder in dem Speicher gespeichert wird. Auf diese Weise kann ein Leerwert, also ein Wert, der dem leeren Bereich zugeordnet ist, korrigiert werden, beispielsweise in einem Fall, in dem Produkt in dem Bereich haften geblieben ist und nicht weiter transportiert wird. So kann insbesondere eine Bestimmung des tatsächlich transportierten Volumenstroms durch den entsprechenden Bereich verbessert werden. Dies kann daher auch zu einer verbesserten Befüllung der Transportfläche führen.

Mit der Vorrichtung gemäß dem ersten Aspekt ist somit eine Erkennung einer Produktbelegung auf einer Transportfläche, die in der Regel eine oberste Etage einer Befüllungsvorrichtung ist, möglich. Dies erlaubt es, Lücken oder starke Schwankungen der Produktbelegung auf der Transportfläche, insbesondere in den Transportrinnen, rechtzeitig zu erkennen und es können entsprechende Gegenmaßnahmen getroffen werden, bevor eine Eskalation der Lage stattfinden kann.

Zudem können Blockaden einzelner Transportrinnen durch Produktanhäufungen oder -anhaftungen rechtzeitig erkannt werden und entsprechende Gegenmaßnahmen können getroffen werden, bevor eine Eskalation der Lage stattfinden kann. Zudem kann die Produktmenge und -verteilung auf der Verteilvorrichtung erfasst werden und die Beschickungseinrichtung kann entsprechend angesteuert werden. Die einzelnen Bereiche, also Sektoren und/oder Zonen, können dabei leicht definiert, erweitert oder anderweitig angepasst werden.

Gemäß einem zweiten Aspekt der vorliegenden Erfindung weist eine Wägeeinrichtung eine Befüllungsvorrichtung gemäß dem ersten Aspekt auf. Die Wägeeinrichtung kann in einigen Ausführungen eine Kombinationswaage sein.

Gemäß einem dritten Aspekt der vorliegenden Erfindung wird ein Verfahren bereitgestellt zum Erfassen der Befüllung einer Wägeeinrichtung, insbesondere einer Kombinationswaage. Das Verfahren weist dabei einen Schritt zum Befüllen einer Transportfläche einer Befüllungsvorrichtung mit einem oder mehreren Produkten mittels einer Beschickungseinrichtung auf. Ein weiterer Schritt ist eine Einteilung der Transportfläche in eine Mehrzahl Bereiche, im Sinne der Erfindung Sektoren und/oder Zonen. Zudem erfolgt ein Erfassen zumindest eines Teilbereichs der Transportfläche mit wenigstens einem Sensor und ein Bestimmen einer Produktbelegung für wenigstens einen vorbestimmten Sektor bzw. wenigstens eine vorbestimmte Zone mittels des Sensors. In einem weiteren Schritt wird der wenigstens eine Sektor (121, 122; 111, 112) bzw. die wenigstens eine Zone (121A, 121B, 121C) angezeigt, und zudem oder alternativ dazu wird eine Sektor- bzw. Zonen-spezifische Produktbelegungsinformation auf einem Anzeigemittel angezeigt.

So kann es beispielsweise ermöglicht werden, eine momentane Befüllungssituation zu erfassen. Dies kann auch in Echtzeit oder nahezu in Echtzeit durchgeführt werden. Auch ist es so möglich, Veränderungen in dem Befüllungsverhalten bzw. dem Produkttransport über eine bestimmte Zeitspanne hinweg zu erfassen. Dies kann durch wiederholte Messungen in regelmäßigen oder unregelmäßigen Abständen erfolgen. Dies kann es auch erlauben, einen Erwartungswert zu bestimmen, also einen Wert, der einer erwarteten Produktmenge entspricht, die in einer bestimmten Zeitspanne durch einen Sektor bzw. eine Zone transportiert werden soll. Dies kann wiederum eine Funktionalität der entsprechenden Vorrichtung erhöhen.

In einigen Ausführungen der Erfindung kann eine Einteilung der Bereiche, also der Sektoren bzw. Zonen, anhand kartesischer Koordinaten erfolgen.

Zudem kann eine Anzeige der Bereiche oder eines Teils der Bereiche durch eine farbige Darstellung und/oder eine farbige Überlagerung auf dem Anzeigemittel erfolgen. Eine derartige Einfärbung kann beispielsweise in der Steuereinheit mittels eines Graphikeditors oder ähnlichem vorgenommen werden, der in der Steuerungsvorrichtung vorgesehen sein kann.

Es sei angemerkt, dass im Sinne der Erfindung eine Produktbefüllung stets eine drei-dimensionale Befüllung bedeutet, da die zugeführten Produkte stets eine dreidimensionale Ausdehnung haben. Insoweit also vorliegend von den durch die Koordinaten festgelegten Bereichen die Rede ist, wird hinsichtlich der Produktbefüllung stets das Volumen eines Raumteiles angesehen, das als Grundfläche die von den Koordinaten festgelegte Fläche aufweist.

Im Übrigen ist das Raumvolumen seitlich durch die von den Koordinatenpunkten zu dem Sensor bzw. zu dem Referenzpunkt reichenden gedachten Verbindungslinien begrenzt, die die Kanten von Seitenflächen des Raumvolumens bilden. Dabei kann bei der Berechnung des tatsächlichen Volumens auch die Form der Transportfläche berücksichtigt werden, die in der Regel keine geometrische Fläche sondern vielmehr eine entsprechend mit Transportrinnen versehene strukturierte Oberfläche ist.

Es versteht sich zudem, dass von der Erfindung auch Ausführungsformen umfasst sind, die eine Kombination einer oder mehrerer der oben genannten Ausführungsformen darstellen.

Diese und weitere Vorteile, Weiterbildungen und Details der Erfindung werden im Folgenden unter Bezugnahme auf die Abbildungen beispielhaft verdeutlicht. Gleiche oder ähnliche Bauteile werden dabei in den Figuren durch dieselben Bezugszeichen dargestellt und eine wiederholte Beschreibung davon wird unterlassen. Dabei zeigt:

Fig. 1 Eine perspektivische Darstellung einer Befüllungsvorrichtung gemäß einer Ausführungsform der Erfindung mit einer Wägeeinrichtung;

Fig. 2 eine perspektivische Darstellung einer erfindungsgemäßen Befüllungsvorrichtung einer Ausführungsform;

Fig. 3 eine Draufsicht auf eine erfindungsgemäße Befüllungsvorrichtung mit verschiedenen dargestellten Sektoren;

Fig. 4 eine schematische Darstellung einer Transportfläche einer erfindungsgemäßen Befüllungsvorrichtung in Draufsicht mit verschiedenen dargestellten Zonen;

Fig. 5 eine erfindungsgemäße Befüllungsvorrichtung gemäß einer Ausführungsform der Erfindung;

Fig. 6 ein x,y,z-Diagramm zur Koordinatentransformation in einer erfindungsgemäßen Befüllungsvorrichtung.

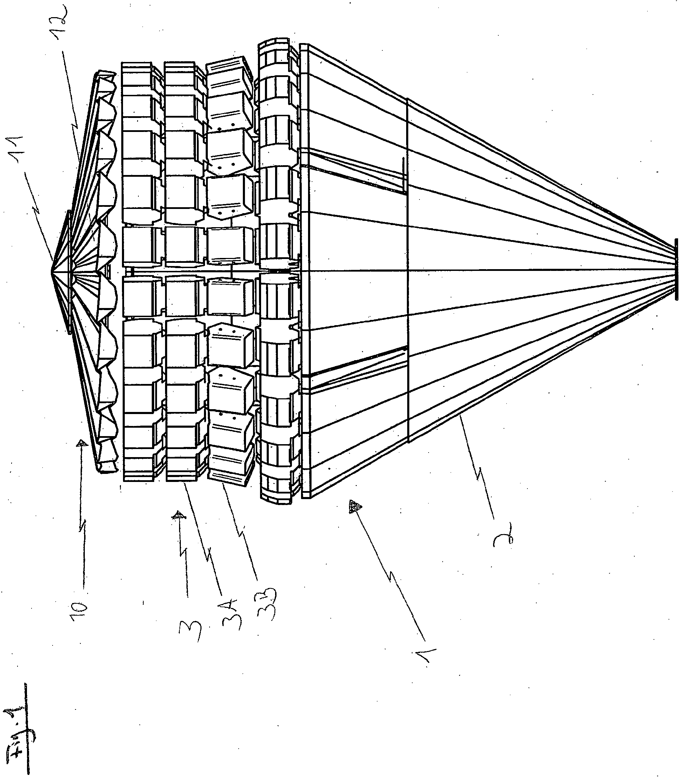

Fig. 1 zeigt eine Wägeeinrichtung 1. Die Wägeeinrichtung 1 gemäß der gezeigten Ausführung ist eine Mehrfach- bzw. Kombinationswaage. Die Wägeeinrichtung 1 hat einen im Wesentlichen trichterförmigen Aufbau 2, an den sich in einer vertikalen Richtung aufwärts ein zylinderförmiger Abschnitt 3 anschließt. Der zylinderförmige Abschnitt 3 weist eine Mehrzahl an Führungs- und Wägeelementen 3A, 3B auf. Die Art und die Anordnung dieser Elemente 3A, 3B sind dem Fachmann geläufig und werden daher hier nicht näher im Detail beschrieben.

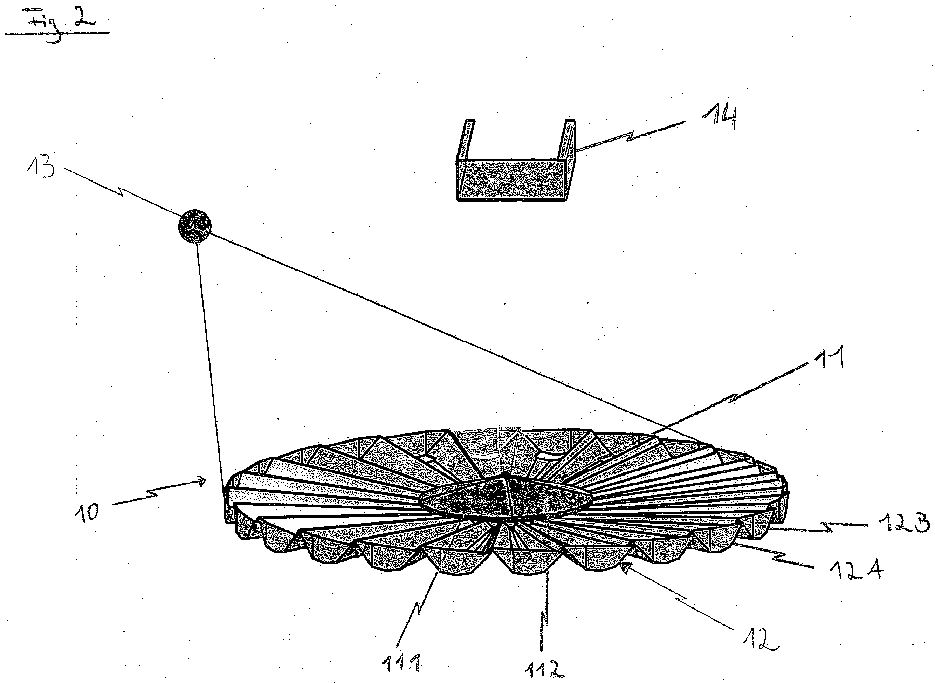

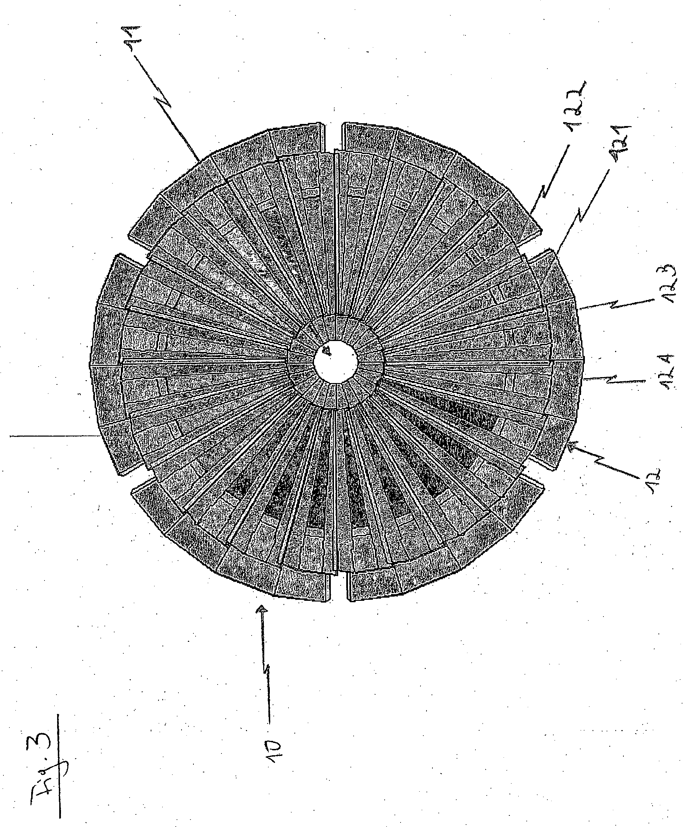

Weiter in vertikaler Richtung, in einem dem trichterförmigen Abschnitt 2 abgewandten Bereich des zylinderförmigen Abschnitts 3 ist eine Befüllungsvorrichtung 10 angeordnet. Wie auch aus Fig. 2 und 3 zu erkennen ist, weist die Befüllungsvorrichtung 10 eine Transportfläche 12 auf, die im Wesentlichen kreisscheiben-förmig ausgebildet ist.

Die Transportfläche 12 wiederum weist eine Mehrzahl an Transportrinnen 12A, 12B, etc. auf. Die Transportrinnen 12A, 12B erstrecken sich in einer radialen Richtung kreissegment-förmig aus Richtung eines Mittelpunkts zu dem Umfang, also der Peripherie, der Transportfläche 12. Die Transportrinnen 12A, 12B sind dabei vertieft relativ zu der Oberfläche der Transportfläche 12 ausgebildet. Auf diese Weise formen sie Rinnen, die einen gerichteten Transport von Produkten auf der Transportfläche 12 erlauben. Dabei sind die Transportrinnen 12A, 12B zudem in einer radialen Richtung von einem Zentrum der Transportfläche nach außen hin zu der Peripherie nach unten geneigt ausgebildet, um einen Transport von Produkt entlang der Rinne zu unterstützen. Eine Neigung ist jedoch nicht zwingend bzw. kann auch in einer umgekehrten Richtung vorgesehen sein.

Die Befüllungsvorrichtung 10 weist zudem in einem zentralen Bereich der Transportfläche eine Verteilvorrichtung 11 auf. Die Verteilvorrichtung 11 hat, wie wiederum auch aus Fig. 2 und 3 zu erkennen ist, eine kreisförmige Grundform, wobei ein Zentrum der Verteilvorrichtung 11 relativ zu dessen Umfang angehoben ist. Somit hat die Verteilvorrichtung 11 eine Trichterform, mit einem in Richtung der Transportoberfläche 12 geöffneten Trichter. Die Verteilvorrichtung kann, wie vorliegend, beispielsweise als ein Verteilteller ausgebildet sein und eine nicht strukturierte Oberfläche aufweisen. Auch kann die Oberfläche mit einer Struktur, beispielsweise aufstehenden Kanten oder ähnlichem versehen sein.

Wie weiter aus Fig. 2 zu erkennen ist, weist die Befüllungsvorrichtung 10 zudem einen Sensor 13 auf. Der Sensor 13 ist vorliegend in einer vertikalen und einer horizontalen Richtung relativ zu der Befüllungsvorrichtung versetzt, so dass der Sensor 13 die Transportoberfläche erfassen kann.

Des Weiteren weist die Befüllungsvorrichtung 10 eine Beschickungseinrichtung 14 auf. Die Beschickungseinrichtung 14 ist vertikal zu der Verteilvorrichtung 11 versetzt angeordnet. So kann ein von der Beschickungseinrichtung 14 zugeführtes Produkt direkt auf die Verteilvorrichtung 11 gelangen und von dort in die Transportrinnen 12A, 12B.

Erfindungsgemäß kann die von dem Sensor 13 erfasste Fläche, vorzugsweise die gesamte Transportfläche 12 und die Verteilvorrichtung 11 in verschiedene Bereiche, Sektoren und Zonen, unterteilt werden. Fig. 3 zeigt eine Draufsicht auf eine Transportfläche 12. Dabei ist eine mögliche Einteilung der Transportfläche in Sektoren 121, 122, etc. dargestellt. In der gezeigten Ausführungsform stimmen die Positionen der Sektoren 121, 122, etc. mit den Positionen der Transportrinnen 12A, 12B, etc. überein.

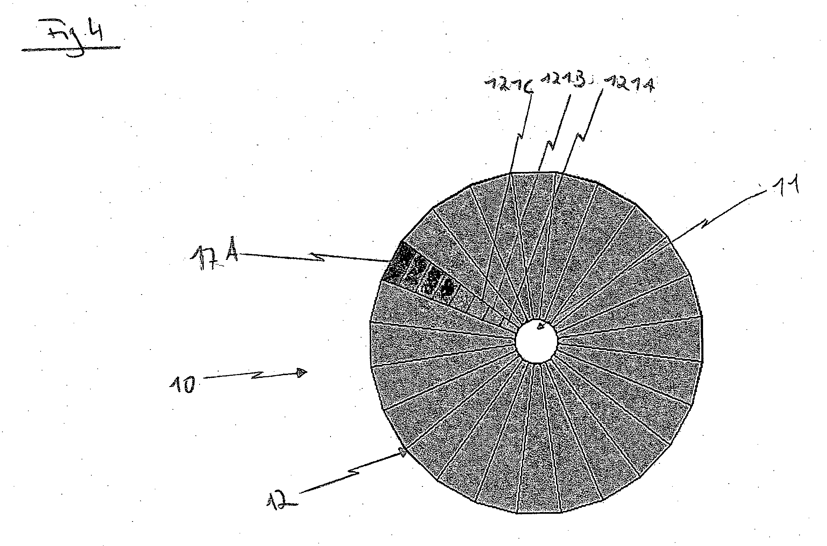

Ähnlich stellt Fig. 4 eine schematische Darstellung einer Transportfläche 12 in Draufsicht dar. Dabei ist eine Einteilung eines Sektors, hier dargestellt als eine Transportrinne 12A, in verschiedene Zonen 121A, 121B, 121C, etc. dargestellt. In der hier gezeigten Ausführungsform haben die Zonen alle in radialer Richtung eine gleiche Abmessung. Folglich unterscheiden sich die Flächeninhalte der einzelnen Zonen voneinander. Es ist auch möglich, dass die Zonen unabhängig voneinander ausgebildet werden oder beispielsweise mit einem selben Flächeninhalt.

Zudem ist es auch denkbar, dass die Sektoren unabhängig voneinander ausgebildet werden bzw. Zonen und/oder Sektoren willkürlich geformt sind.

Des Weiteren, wie beispielsweise auch aus Fig. 1 zu erkennen ist, kann der Bereich der Verteilvorrichtung 11 in verschiedene Sektoren 11A, 11B, etc. unterteilt sein. Diese Sektoren können beispielsweise jeweils ein Viertel der Verteilvorrichtung darstellen.

Auf diese Weise kann bei einer Befüllung durch die ganze Befüllungsvorrichtung 10 hinweg, eine kontinuierliche Erfassung und Überwachung der Produktbefüllung durchgeführt werden.

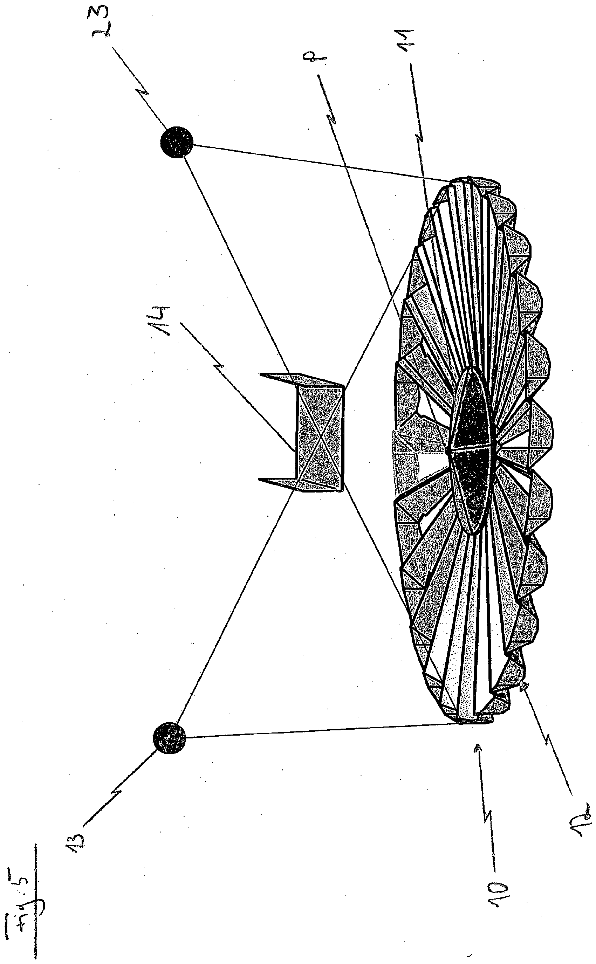

Fig. 5 zeigt eine weitere Ausführung der vorliegenden Erfindung. Diese unterscheidet sich von der zuvor beschriebenen Ausführungsform darin, dass ein zweiter Sensor 23 vorgesehen ist, der an einer zu dem ersten Sensor 13 versetzten Position angeordnet ist. Dies ermöglicht es, Teile der Befüllungsvorrichtung auch darin zu erfassen, wenn der Sensor 13 dies aufgrund baulicher Umstände oder aus anderen Gründen nicht vermag. Dabei überlappen sich die Erfassungsbereiche der Sensoren 13, 23 im vorliegenden Fall in großen Teilen. So kann auch eine Redundanz bei der Messung geschaffen werden, beispielsweise um präzisere Werte zu erhalten oder eine Ausfallwahrscheinlichkeit der Sensormessung zu reduzieren.

Ebenfalls in Fig. 5 zu erkennen ist eine Position des Zentrums des Verteiltellers, die zugleich die Position des Zentrums P der Transportfläche 12 darstellt. Diese Position P kann beispielsweise als ein Referenzpunkt für eine Eichungsmessung, eine Kalibrierung oder eine Funktionsüberprüfung des Sensors dienen.

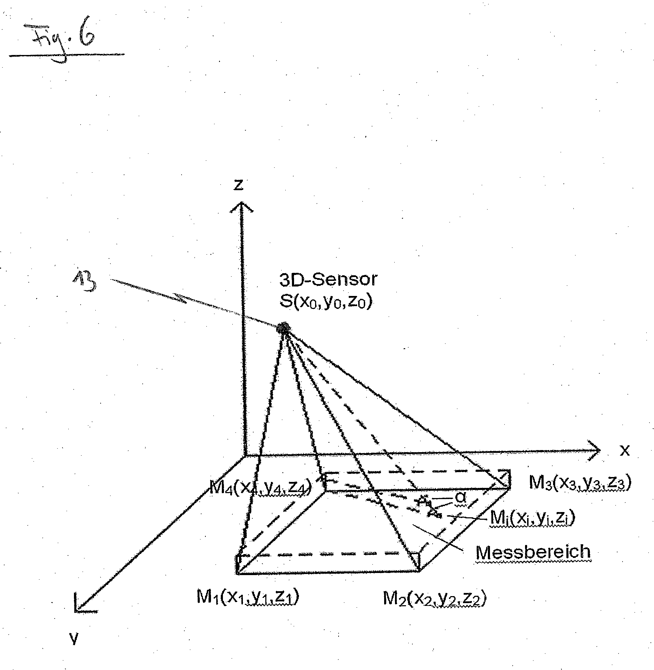

Fig. 6 zeigt ein x,y,z-Diagramm zur Koordinatentransformation in einer erfindungsgemäßen Befüllungsvorrichtung. Dabei wird eine Position S des Sensors 13 in Raumkoordinaten $S(x_0, y_0, z_0)$ festgelegt. Jeder festgelegte Messbereich, also ein Sektor 121, 122, etc. bzw. eine Zone 121A, 121B, 121C, etc. wird durch eine Vielzahl von Messpunkten $M_1, M_2, M_3, M_4, ..., M_i$ festgelegt. Da der Sensor 13, 23 versetzt zu dem jeweiligen Messbereich ist, muss zudem eine Neigung des Messbereichs relativ zu dem Sensor berücksichtigt werden. Eine Position $M_i(x_i,y_i,z_i)$ eines Punktes in dem Bereich wird daher auch durch einen Winkel $\alpha$ gekennzeichnet. Der Winkel $\alpha$ ist dabei der Winkel, den eine direkte Verbindung zwischen dem Sensor und dem Messpunkt $M_i$ mit der Verbindung des Punktes $M_i$ mit einem Punkt, an dem sich eine Projektion des Sensors in die Ebene des jeweiligen Messbereichs befindet, einnimmt. Auf dieses Weise kann eine genaue Abstandsbestimmung und damit eine genaue Bestimmung der Produktbefüllung in dem entsprechenden Messbereich, also dem Messvolumen, unter Berücksichtigung des Parallaxe Effektes durchgeführt werden.

Zusammengefasst weist eine Befüllungsvorrichtung 10, insbesondere für eine Wägeeinrichtung, eine Beschickungsvorrichtung 14 zum Zuführen von Produkten, eine Transportfläche 12, die von der Beschickungsvorrichtung 14 mit Produkten versorgt wird, wenigstens einen Sensor 13, 23 zum Erfassen und Weiterleiten von Produktbelegungsinformationen auf der Transportfläche 12, sowie eine Steuervorrichtung auf. Der wenigstens eine Sensor 13, 23 ist dabei ausgebildet, zumindest eine Teilfläche der Transportfläche 12 zu erfassen und die Steuerungsvorrichtung ist ausgebildet, die von dem wenigstens einen Sensor 13, 23 erfasste Fläche virtuell in eine Mehrzahl an Sektoren 121, 122; 111, 112 zu unterteilen. Zudem wird ein Verfahren gezeigt, zum Durchführen einer Überwachung und Erfassung einer Befüllung einer Befüllungsvorrichtung 10.

## Patentansprüche

1. Befüllungsvorrichtung (10), insbesondere für eine Wägeeinrichtung, aufweisend:

   eine Transportfläche (12), die von einer Beschickungsvorrichtung (14) mit Produkten versorgt wird,
   wenigstens einen Sensor (13, 23) zum Erfassen und Weiterleiten von Produktbelegungsinformationen auf der Transportfläche (12), sowie
   eine Steuervorrichtung, wobei
   der wenigstens eine Sensor (13, 23) ausgebildet ist, zumindest eine Teilfläche der Transportfläche (12) zu erfassen und die Steuerungsvorrichtung ausgebildet ist, die von dem wenigstens einen Sensor (13, 23) erfasste Fläche virtuell in eine Mehrzahl an Sektoren (121, 122; 111, 112) zu unterteilen, um die Produktbelegungsinformationen einem Sektor (121, 122; 111, 112) zuzuordnen, wobei
   die Transportfläche (12) eine Mehrzahl an Transportrinnen (12A, 12B) aufweist, und
   zumindest ein Sektor (121, 122) mit einer Transportrinne (12A, 12B) deckungsgleich ist, **dadurch gekennzeichnet, dass** die Steuerungsvorrichtung ausgebildet ist, die Mehrzahl an Sektoren (121, 122; 111, 112) jeweils virtuell in eine Mehrzahl an Zonen (121A, 121B, 121C) zu unterteilen und die Sektoren (121, 122; 111, 112) und/oder die Zonen (121A, 121B, 121C) anhand kartesischer Koordinaten relativ zu dem Sensor (13, 23) einzuteilen.

2. Befüllungsvorrichtung (10) gemäß Anspruch 1, wobei die Transportfläche (12) eine Verteilvorrichtung (11) aufweist.

3. Befüllungsvorrichtung (10) gemäß Anspruch 2, wobei zumindest ein Sektor (121, 122) mit zumindest einem Teil der Verteilvorrichtung (11) deckungsgleich ist.

4. Befüllungsvorrichtung (10) gemäß einem der vorhergehenden Ansprüche, wobei die Befüllungsvorrichtung (10) des Weiteren ein Anzeigemittel aufweist, wobei auf dem Anzeigemittel die erfassten Sektoren (121, 122; 111, 112) bzw. Zonen (121A, 121B, 121C) darstellbar sind und/oder zumindest einer der Sektoren (121, 122; 111, 112) bzw. zumindest eine der Zonen (121A, 121B, 121C) farbig darstellbar ist.

5. Befüllungsvorrichtung (10) gemäß Anspruch 4, wobei jedem Sektor (121, 122; 111, 112) bzw. jeder Zone (121A, 121B, 121C) auf dem Anzeigemittel eine vorbestimmte Farbe zugeordnet ist.

6. Befüllungsvorrichtung (10) gemäß einem der vorhergehenden Ansprüche, wobei der Sensor (13, 23) ausgebildet ist, die Befüllung der Transportfläche (12), insbesondere die Befüllung jedes Sektors (121, 122; 111, 112) bzw. jeder Zone (121A, 121B, 121C), quantitativ zu erfassen.

7. Befüllungsvorrichtung (10) gemäß einem der vorhergehenden Ansprüche, wobei die Steuervorrichtung des Weiteren einen Filter umfasst, zum Glätten der von dem Sensor (13, 23) erfassten Produktbelegungsinformationen.

8. Befüllungsvorrichtung (10) gemäß einem der vorhergehenden Ansprüche, wobei die Befüllungsvorrichtung des Weiteren eine Speichervorrichtung aufweist, zum Speichern von Positionsinformationen der erfassten Transportfläche (12), insbesondere zum Speichern der Positionsinformation wenigstens eines vorbestimmten Referenzpunktes.

9. Befüllungsvorrichtung (10) gemäß einem der vorhergehenden Ansprüche, wobei die Befüllungsvorrichtung (10) eine Mehrzahl an Sensoren (13, 23) aufweist, deren Erfassungsbereiche einander überlappen.

10. Wägeeinrichtung (1), insbesondere Kombinationswaage, mit einer Befüllungsvorrichtung (10) gemäß einem der vorhergehenden Ansprüche.

11. Verfahren zum Erfassen der Befüllung einer Befüllungsvorrichtung nach einem der Ansprüche 1-9 (10), aufweisend die Schritte:

Befüllen einer Transportfläche (12) der Befüllungsvorrichtung (10) mit Produkten,
Einteilung einer Transportrinne (12A, 12B) der Transportfläche (12) in eine Mehrzahl an Sektoren (121, 122; 111, 112) und/oder Zonen 121B, 121C),
Erfassen zumindest eines Teilbereichs der Transportfläche (12) mit wenigstens einem Sensor (13, 23),
Bestimmen einer Produktbelegung für wenigstens einen vorbestimmten Sektor (121, 122; 111, 112) bzw. eine vorbestimmte Zone (121A, 121B, 121C) mittels des Sensors (13, 23),
Anzeigen des wenigstens einen Sektors (121, 122; 111, 112) bzw. der wenigstens einen Zone (121A, 121B, 121C),
und/oder Ausgeben einer Sektor- bzw. Zonen-spezifischen Produktbelegungsinformation auf einem Anzeigemittel.

12. Verfahren gemäß Anspruch 11, wobei die Einteilung der Transportfläche (12) relativ zu dem Sensor (13, 23) mittels kartesischer Koordinaten vorgenommen wird.

13. Verfahren gemäß einem der Ansprüche 11 oder 12, wobei die Anzeige des wenigstens einen Sektors (121, 122; 111, 112) bzw. der wenigstens einen Zone (121A, 121B, 121C) und/oder der erfassten Produktbelegung der einzelnen Bereiche anhand vorbestimmter Farbvorgaben auf dem Anzeigemittel dargestellt wird.

## Claims

1. Filling device (10), in particular for a weighing device, comprising:

a transport area (12), which is supplied with products from a loading device (14),
at least one sensor (13, 23) for capturing and forwarding of product occupation information on the transport area (12),
and
one control means, wherein
the at least one sensor (13, 23) is formed to capture at least a partial area of the transport area (12), and the control means is formed to divide the area captured by the at least one sensor (13, 23) virtually in a plurality of sectors (121, 122; 111, 112) in order to assign the product occupation information to one sector (121, 122; 11, 112), wherein the transport area (12) comprises a plurality of transport grooves (12A, 12B), and
at least one sector (121, 122) is congruent with one transport groove (12A, 12B),

**characterized in that**

the control means is formed to divide the plurality of sectors (121, 122; 111, 112) respectively virtually in a plurality of zones (121A, 121B, 121C) and to divide the sectors (121, 122; 111, 112) and/or the zones (121A, 121B, 121C) according to Cartesian coordinates relatively to the sensor (13, 23).

2. Filling device (10) according to claim 1, wherein the transport area (12) comprises at least one distribution device (11).

3. Filling device (10) according to claim 2, wherein at least one sector (121, 122) is congruent with at least one part of the distribution device (11).

4. Filling device (10) according to one of the preceding claims, wherein the filling device (10) further comprises display means, wherein on the display means the captured sectors (121, 122; 111, 112) or zones (121A, 121B, 121C) are displayable and/or at least one of the sectors (121, 122; 111, 112) or at least one of the zones (121A, 121B, 121C) is displayable in colour.

5. Filling device (10) according to claim 4, wherein a predetermined colour is assigned to each sector (121, 122; 111, 112) or each zone (121A, 121B, 121C) on the display means.

6. Filling device (10) according to one of the preceding claims, wherein the sensor (13, 23) is formed to quantitatively capture the filling of the transport area (12), especially the filling of each of the sectors (121, 122; 111, 112) or zones (121A, 121B, 121C).

7. Filling device (10) according to one of the preceding claims, wherein the control means further comprises a filter for smoothing the product occupation information captured by the sensors (13, 23).

8. Filling device (10) according to one of the preceding claims, wherein the filling device further comprises a storage device for storing of position information of the captured transport area (12), in particular for storing of the position information of at least one predetermined reference point.

9. Filling device (10) according to one of the preceding claims, wherein the filling device (10) comprises a plurality of sensors (13, 23), whose capture areas overlap each other.

10. Weighing device (1), in particular combination scale, with a filling device (10) according to one of the preceding claims.

11. Method for capturing of the filling process of a filling device (10) according to one of claims 1 to 9, comprising the steps of:

filling of a transport area (12) of the filling device (10) with products,
dividing the transport area (12) into a plurality of sectors (121, 122; 111, 112) and/or zones (121A, 121B, 121C),
capturing of at least a partial sector of the transport area (12) with at least one sensor (13, 23),
determining of product occupation for at least one predetermined sector (121, 122; 111, 112) or one predetermined zone (121A, 121B, 121C) by means of the sensor (13, 23),
displaying of the at least one sector (121, 122; 111, 112) or the at least one zone (121A, 121B, 121C),
and/or outputting of one product occupation information specific for one sector or zone on a display means.

12. Method according to claim 11, wherein the division of the transport area (12) is performed relative to the sensor (13, 23) by means of Cartesian coordinates.

13. Method according to one of claims 11 or 12, wherein the display of the at least one sector (121, 122; 111, 112) or the at least one zone (121A, 121B, 121C) and/or the captured product occupation of the single sectors is displayed according to predetermined colour specification on the display means.

**Revendications**

1. Dispositif de remplissage (10) en particulier pour une installation de pesée comprenant :

une surface de transport (12) alimentée en produits par un dispositif de chargement (14),
au moins un détecteur (13, 23) pour détecter et transmettre des informations d'occupation de produits sur la surface de transport (12),
ainsi qu'un dispositif de commande,
le détecteur (13, 23) étant réalisé pour détecter au moins une surface partielle de la surface de transport (12) et le dispositif de commande étant réalisé pour subdiviser virtuellement la surface détectée par le détecteur (13, 23) en une série de secteurs (121, 122, 111, 112) pour associer les informations d'occupation de produits à un secteur (121, 122, 111, 112),
la surface de transport (12) comprenant une série de gouttières de transport (12a, 12b), et
au moins un secteur (121, 122) coïncidant avec une gouttière de transport (12a, 12b),
**caractérisé en ce que**
le dispositif de commande est réalisé pour subdiviser respectivement virtuellement la série de secteurs (121, 122, 111, 112) en une série de zones (121A, 121B, 121C) et répartir les secteurs (121, 122, 111, 112) et/ou les zones (121A, 121B, 121C) à partir de coordonnées cartésiennes par rapport au capteur (13, 23).

2. Dispositif de remplissage (10) conforme à la revendication 1, dans lequel
la surface de transport (12) comporte un dispositif de répartition (11).

3. Dispositif de remplissage (10) conforme à la revendication 2, dans lequel
au moins un secteur (121, 122) coïncide avec au moins une partie du dispositif de répartition (11).

4. Dispositif de remplissage (10) conforme à l'une des revendications précédentes,
comprenant, en outre, des moyens indicateurs, sur ces moyens indicateurs, les secteurs (121, 122, 111, 112) ou les zones (121A, 121B, 121C) détectés pouvant être représentés et/ou au moins l'un des secteurs (121, 122, 111, 112) ou au moins l'une des zones (121A, 121B, 121C) pouvant être représenté en couleur.

5. Dispositif de remplissage (10) conforme à la revendication 4,
dans lequel
à chaque secteur (121, 122, 111, 112) ou à chaque zone (121A, 121B, 121C) est associée une couleur prédéfinie sur les moyens indicateurs.

6. Dispositif de remplissage (10) conforme à l'une des revendications précédentes,
dans lequel
le détecteur (13, 23) est réalisé pour pouvoir détecter quantitativement le remplissage de la surface de transport (12) en particulier le remplissage de chaque secteur (121, 122, 111, 112) ou de chaque zone (121A, 121B, 121C).

7. Dispositif de remplissage (10) conforme à l'une des revendications précédentes,
dans lequel
le dispositif de commande comprend, en outre, un filtre pour permettre de lisser les informations d'occupation de produits détectées par le détecteur (13, 23).

8. Dispositif de remplissage (10) conforme à l'une des revendications précédentes,
comprenant, en outre, un dispositif de mémoire pour mémoriser des informations de position de la surface de transport (12) détectée, en particulier pour mémoriser l'information de position d'au moins un point de référence prédéfini.

9. Dispositif de remplissage (10) conforme à l'une des revendications précédentes,
comprenant un ensemble de détecteurs (13, 23) dont les plages de détection se chevauchent.

10. Installation de pesée (1), en particulier machine de pesage combinatoire, comprenant un dispositif de remplissage (10) conforme à l'une des revendications précédentes.

11. Procédé de détection du remplissage d'un dispositif de remplissage (10) conforme à l'une des revendications 1 à 9 comprenant les étapes consistant à :

charger une surface de transport (12) du dispositif de remplissage (10) avec des produits,
répartir une gouttière de transport (12A, 12B) de la surface de transport (12) en une série de secteurs (121, 122, 111, 112) et/ou de zones (121A, 121B, 121C),
détecter au moins un domaine partiel de la surface de transport (12) avec au moins un détecteur (13, 23),
déterminer une occupation de produits pour au moins un secteur prédéfini (121, 122, 111, 112) ou une zone prédéfinie (121A, 121B, 121C) au moyen du détecteur (13, 23),
indiquer le secteur (121, 122, 111, 112) ou la zone (121A, 121B, 121C) et/ou délivrer une information d'occupation de produits spécifique au secteur ou à la zone sur un moyen indicateur.

12. Procédé conforme à la revendication 11,
selon lequel
la répartition de la surface de transport (12) par rapport au détecteur (13, 23) est effectuée au moyen de coordonnées cartésiennes.

13. Procédé conforme à l'une des revendications 11 et 12,
selon lequel

l'indication du secteur (121, 122, 111, 112) ou de la zone (121A, 121B, 121C) et/ou l'occupation de produits détectée des différents domaines est représentée sur les moyens indicateurs à partir de données de couleur prédéfinies.

Fig. 1

Fig. 2

Fig. 3

Fig. 4

Fig. 5

EP 2 887 029 B1

Fig. 6

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- JP 2013195125 A
- US 8350847 B2
- US 2012075534 A1
- US 2011292036 A1
- US 2012056982 A1